# EUROPEAN PATENT SPECIFICATION

(11) **EP 0 377 757 B1**
(45) Date of publication and mention of the grant of the patent: **08.01.1997**
(21) Application number: 89908252.3
(22) Date of filing: 14.07.1989
(51) Int. Cl.: G02F 1/133, G02F 1/135, G02F 1/137

(54) **REFLECTION-TYPE LIQUID CRYSTAL ELECTRO-OPTICAL DEVICE AND PROJECTION-TYPE DISPLAY DEVICE USING THE SAME**
REFLEKTIVE ELEKTROOPTISCHE FLÜSSIGKRISTALLVORRICHTUNG UND PROJEKTIONSANZEIGEVORRICHTUNG UNTER VERWENDUNG DERSELBEN
DISPOSITIF ELECTRO-OPTIQUE A CRISTAUX LIQUIDES DU TYPE A REFLEXION ET DISPOSITIF D'AFFICHAGE DU TYPE A PROJECTION L'UTILISANT

(30) Priority: 14.07.1988 JP 176036/88; 19.01.1989 JP 10412/89; 19.01.1989 JP 10414/89; 16.06.1989 JP 154017/89; 07.07.1989 JP 176271/89
(43) Date of publication of application: 18.07.1990
(73) Proprietor: SEIKO EPSON CORPORATION, Shinjuku-ku Tokyo 163-08 (JP)
(72) Inventor: SONEHARA, Tomio, Nagano-ken 392 (JP); ITO, Chiharu, Nagano-ken 392 (JP)
(74) Representative: Hoffmann, Eckart, Dipl.-Ing.
(86) International application number: PCT/JP89/00707
(87) International publication number: WO 90/00756

(56) References cited:
- EP-A- 0 142 326
- EP-A- 0 294 899
- JP-A- 5 789 724
- JP-A-62 299 940
- JP-A-63 115 137
- JP-A-63 271 232
- US-A- 3 972 587
- SID INTERNATIONAL SYMPOSIUM, DIGEST OF TECHNICAL PAPERS, May 1979, pages 126-127; A.R. KMETZ : "Single polarizer twisted nematic display"
- MOLECULAR CRYSTALS & LIQUID CRYSTALS, vol. 158. B, May 1988, pages 241-253, Montreux, CH; F. LEENHOUTS et al.: "Optics of twisted nematic liquid crystal layers"

## Description

### Technical Field

This invention relates to a reflection type electro optical device and a projection type display apparatus using the same. The electro optical device includes a twisted liquid crystal layer and utilizes a birefringence effect of a liquid crystal controlled by an electric field.

### BACKGROUND ART

There have been two kinds of prior art reflection type liquid crystal electro optical devices each of which utilizes a twisted liquid crystal. One uses an optically uniaxial electro optical medium as a λ/4 phase plate. The other is described in USP No. 4,019,807 and the JP-A-56-43681, wherein the liquid crystal with a twist angle of 45° to the molecular axis receives a linearly polarized incident light applied slantingly and transmits it as an elliptically polarized light without any refraction under no electric field or subjected to a birefringence under an electric field.

However, in the prior art reflection type liquid crystal electro optical devices, there have been problems in that a tolerance is small for the thickness of a liquid crystal layer and a displaying uniformity is lowered. Also, since the output is an elliptically polarized light, a loss in light increases.

The document US-A-3,972,587 discloses a reflection type liquid crystal electro-optical device comprising a first and a second substrate opposing each other, of which at least the first substrate is transparent, a twisted nematic liquid crystal layer sandwiched between said substrates and having a finite twist angle of 45°, and a reflective surface arranged to reflect light incident on said first substrate after having passed said first substrate and said liquid crystal layer, wherein the liquid crystal layer acts as a quarter-wavelength plate such that when linearly polarized input light is made to be incident on said first substrate with its direction of polarization being 45° with respect to the director of the liquid crystal layer at the interface to said first substrate, said linearly polarized input light is turned to circularly polarized light at said reflective surface and the circularly polarized light reflected at said reflective surface, after having again passed the liquid crystal layer, is emitted as linearly polarized output light from said first substrate. When no voltage is applied to the liquid crystal layer (off-state) the polarization of the input light and that of the output light are parallel to each other, whereas they are orthogonal to each other when a voltage is applied (on-state).

An object of the present invention is to provide a reflection type electro optical device which makes possible less light amount loss and much margin in manufacture by optimizing the twist angle, a product of a layer thickness and birefringence (hereinafter referred to as Δnd), and an incident polarized light angle.

Furthermore, another object of the present invention is to provide a reflection type liquid crystal electro optical device in which the dependency of the optical characteristic with respect to an electric field is sharp and the liquid crystal responds sufficiently to a small variation in r.m.s. voltage, whereby a so-called multiplex driving is possible.

Still another object of the present invention is to provide a reflection type liquid crystal electro optical device having a large effective picture element area in comparison with a prior art active element type liquid crystal electro optical device with active elements, for example, thin film transistors (hereinafter referred to TFTs) and metal-insulator-metal elements (hereinafter referred to MIMs).

Further still another object of the present invention is to provide a projection type display apparatus in which the optical arrangement is simple, light utilization ratio is large and color reproductivity is superior.

### DISCLOSURE OF INVENTION

These objects are achieved with a reflection type liquid crystal electro-optical device as claimed in claim 1 and a projection type color display apparatus as claimed in claim 11, respectively.

Since the device according to the present invention can make the Δnd value larger than that of a prior art device, a large margin in manufacture is obtained with respect to the thickness of a liquid crystal layer. In addition, since the transmitted light is linearly polarized light, the light amount loss is small in comparison with that of an elliptically polarized light transmitted from a prior art TN with a twist angle of 45°.

Also, since a reflective display mode is used, active elements are able to be arranged under the picture elements, whereby a high aperture ratio (a ratio of the effective picture element area to the picture element area) is obtained without occupying an area for picture element address means (active elements). This leads to a reduced light amount loss.

Furthermore, an untransparent substrate (for example, Si substrates) can be utilized allowing an integration of peripheral circuits including functional circuits, driver circuits and the like. This makes possible the realization of a functional space light modulation element in addition to improved productivity and reliability.

Also, since the liquid crystal electro optical device is arranged optically in an optimum condition, the projection type display apparatus can be realized with improved contrast and brightness.

Also, in the liquid crystal electro optical device, a peaked reflection ratio is able to be easily adjusted by turning to the wavelength of a light which is monochromed with a dichroic prism and then used to illuminated the liquid crystal electro optical device. Hence, the chromaticity of a displayed image is improved and an image with a color close to natural color has been obtained.

### BRIEF DESCRIPTION OF DRAWINGS

- Figs. 1(a) and 1(b): are cross sectional views of a reflection type electro optical device according to the present invention.
- Fig. 2: is a perspective view showing an orientation of a liquid crystal.
- Fig. 3: is a characteristic of reflectivity (at 550nm) with respect to applied voltages for the device shown in Fig. 1.
- Fig. 4: shows that an incident light twists at 63°.
- Figs. 5(a), 5(b) and 5(c): are graphs showing a reflectivity at Δnd and OFF state.
- Figs. 6(a) and 6(b): are graphs showing the relationship between Δnd and reflectivity with an incident polarized light direction as a parameter.
- Fig. 7: is a structural diagram showing a reflection type liquid crystal electro optical device using a PBS as a polarizer.
- Fig. 8: is a cross sectional view of a reflection type electro optical device addressed by TFT elements.
- Fig. 9: is a cross sectional view of a reflection type electro optical device of the type written with light.
- Fig. 10: is a structural view of a reflection type electro optical device incorporating peripheral circuits.
- Fig. 11: is a cross sectional view of a reflection type liquid crystal electro optical device using MIM elements.
- Figs. 12(a), 12(b), 12(c), 12(d) and 12(e): are flow diagrams for manufacturing.
- Fig. 13: is a cross sectional view of a reflection type electro optical device in a XY matrix form.
- Fig. 14: is a structural diagram of a projection type display apparatus.
- Fig. 15: is a structural diagram of a reflection type electro optical apparatus using a reflection type electro optical device addressed by CRT.
- Fig. 16: is a diagram for a reflection type liquid crystal electro optical device showing the relationship between Δnd and wavelength λ at which the reflectivity has a peak.

### BEST MODE FOR CARRYING OUT THE INVENTION

### EXAMPLE 1

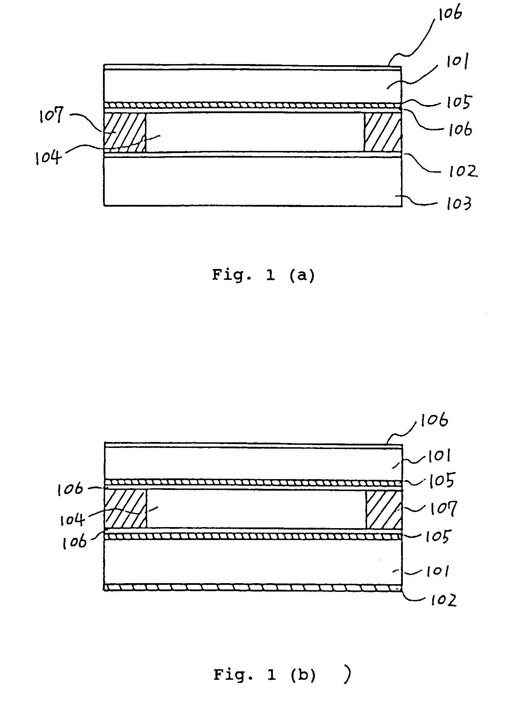

Fig. 1 is a cross sectional view showing a reflection type electro optical device according to the present invention. In this structure, a TN liquid crystal 104 is sandwiched between a transparent substrate 101 and an opposite substrate 103 coated with a reflective film 102. The transparent substrate is required to have no optical anisotropy. In this example, a glass substrate is used. Numeral 105 is a transparent electrode to apply an electric field across the liquid crystal layer. The other electrode is formed of a metal film and acts as the reflective film 102. A reflection decreasing coating 106 is formed over the surface of the transparent conductive electrode and the light input (incident)/output (transmission) surface to suppress the reflection of unnecessary light. Numeral 107 is a spacer to support the substrates. Fig. 1(b) is a cross sectional view showing a reflective film 102 formed over the outside of the opposite substrate 103. In this structure, any material giving an optical reflection may be used as a reflective film. In Fig. 1(b), the other reference numerals correspond to those of Fig. 1(a).

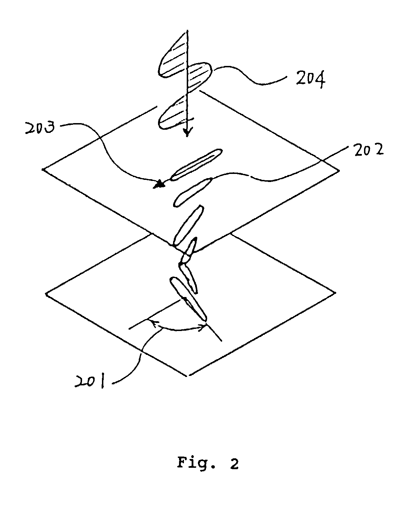

Fig. 2 is a perspective view showing the orientation of liquid crystal molecules. Fig. 2 shows that the twist angle 201 of a nematic liquid crystal layer is 63°, the product of the birefringence of the liquid crystal and the thickness of the liquid crystal layer is 0.2 (in µm, hereinafter referred to Δnd). The incident light is polarized to a linearly polarized light by polarizers which are placed closely to one another. The polarized light is adjusted to a degree that an electric field oscillating plane 204 is parallel to the director 203 of the liquid crystal molecules 202 at the input side. That is, when the applied voltage is zero, the molecules are oriented in parallel at the interface of the substrate, so as to provide an orientation of 63° between the upper and lower substrates as shown in Fig. 2. This orientation process may be given by rubbing and obliquely evaporating deposition or the like.

Likewise, if a twist angle is 193° and Δnd = 0.58, an incident light linearly polarized turns into an circularly polarized light and after reflection, its polarization is rotated by 90° with respect to that of the incident light at the input side.

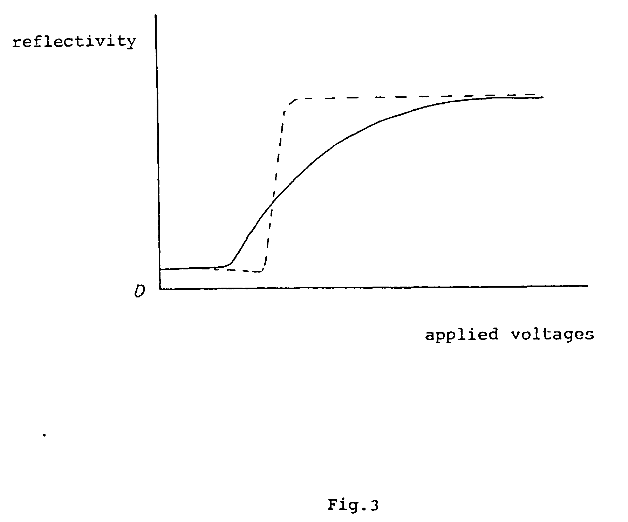

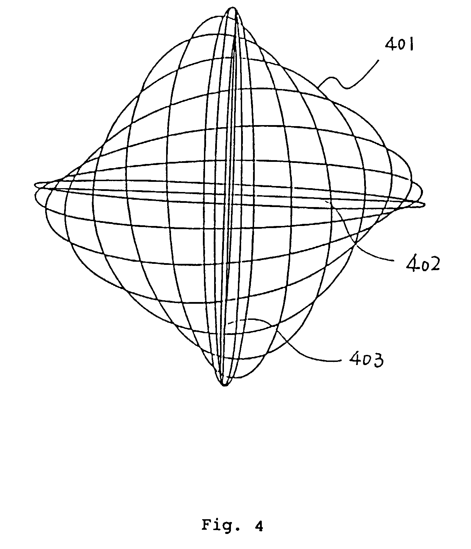

Fig. 3 is a characteristic of reflectivity (at 550nm) with respect to applied voltages for the device shown in Fig. 1. The solid line shows a 63° twisted case and the broken line shows a 193° twisted case. First let us explain a case where the voltage is zero. When a linearly polarized light 402 is applied, the locus of the elliptically polarized light is rotated, as shown in Fig. 4. At the reflection surface, the locus is nearly a circularly polarized light 401 and the phase is reflected back after being rotated by 180°. Again the light travels into the liquid crystal layer and transmits out as a linearly polarized light 403. Consequently, its polarization is rotated by about 90° at the output side. For this reason, the light is blocked by the polarizer, so that the reflectivity is decreased (in an OFF state). Next, let us explain a case where a voltage is applied. Molecules of a liquid crystal are reoriented in the direction of an electric field because of the anisotropy in dielectric constant. This removes the birefringence, so that the incident light and the linearly polarized light is reflected back and transmitted out without any change. Hence, any decrease in reflectivity does not occur (in ON state).

Such a change in polarized light occurs in a limited condition. This invention is a result of a careful study of the condition. The liquid crystal layer is needed to have two optical characteristics. One is that a linearly polarized light becomes a circularly polarized light after a single transmission. The other is that the circularly polarized light is reflected and then its polarization is rotated by 90° at the reverse transmission of it. Fig. 4 shows that an incident light twists at 63°.

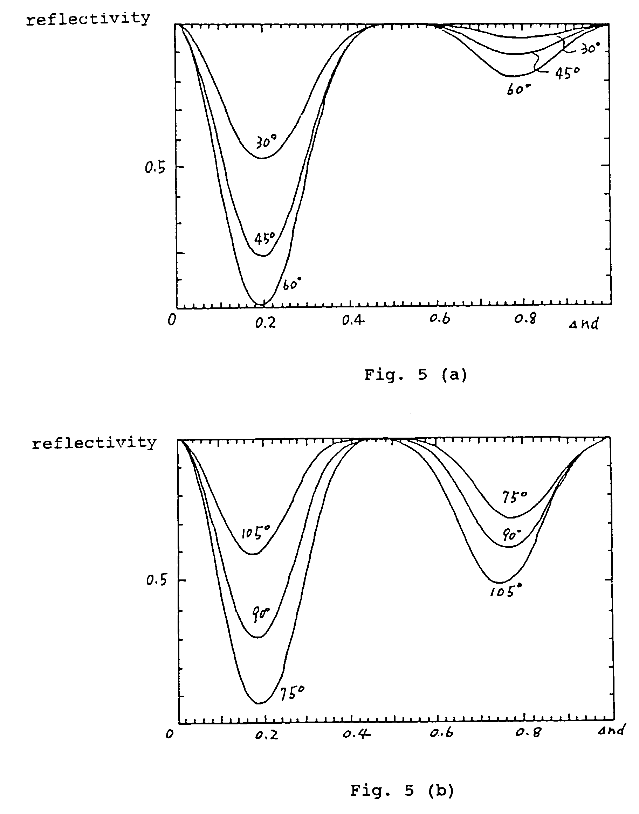

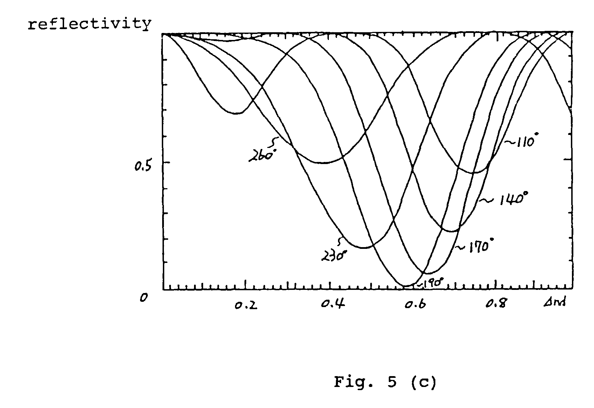

Figs. 5(a), 5(b) and 5(c) are graphs each showing Δnd against the reflectivity at OFF state. The parameter is a twist angle of the liquid crystal layer. The polarization of an incident light is met with the directors of the liquid crystal molecules at the incident surface.

The reflectivity in an "ON state" is a constant determined by the transmittance of a polarizer. This exhibits that when the twist angle is approximately 60° and Δnd = 0.2, the reflectivity becomes nearly zero. A detailed examination exhibits that the optimum twist angle is 63°. Furthermore, another condition is that the twist angle is 190° and Δnd is 0.6. In a more detailed examination, an optimum condition at a wavelength of 550nm is that the twist angle is 193° and Δnd =0.58.

As shown in Fig. 4, the locus of the elliptically polarized light becomes a circularly polarized light at the reflection surface and is a linearly polarized light rotated by 90° with respect to that at the light output surface. In comparison with the use of a 1/4λ plate, the polarized light enters in this mode with the same direction as the director of a liquid crystal. This mode is characterized by that the light is hard to be subjected to a birefringence a large Δnd to be provided at the same phase change and a small periodic Δnd dependence. This leads to a relatively large thickness of a liquid crystal layer and a large margin in manufacture. This phenomenon seems to be an electrically controlled birefringence in a twist structure (hereinafter abbreviated to TN-ECB).

Also, the Δnd effect functions in a manner similar to the case that a linearly polarized light enters vertically to the director of the liquid crystal. The reason is that Δnd has no polarity.

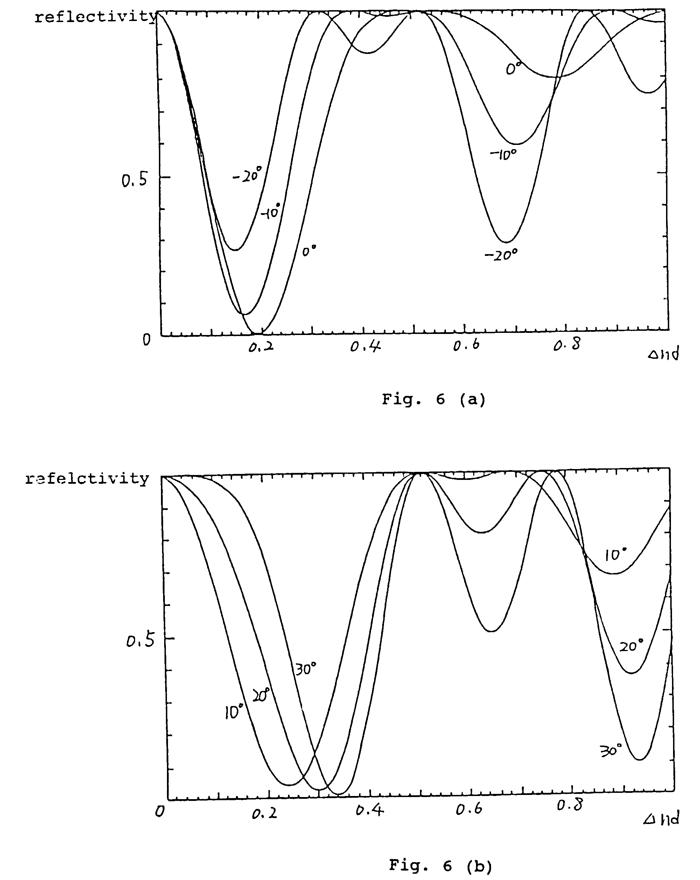

Figs. 6(a) and 6(b) show the relationship between Δnd and the reflectivity as a parameter of angles between the polarizer and the director of the liquid crystal. According to this, there is a condition that the reflectivity is zero when the direction of the polarized light is at +30°. In this case, the locus of the elliptically polarized light is a circularly polarized light at the reflection surface, as shown in Fig. 4.

Other conditions will be found by taking different parameters. In this case, the minimum Δnd has to be set to control low reflectivity variations due to wavelength. In an extreme small Δnd, since the thickness of the liquid crystal becomes too small, a suitable selection is needed. Since a reflection type device which has twofold optical distance has a small allowable variation in the thickness of a liquid crystal, there is a problem in manufacturing, whereby a large Δnd is required. This means that the margin is made wider in manufacturing of the elements. In reviewing the above described conditions of Δnd = 0.2, d becomes 2,5 µm in a liquid crystal with a typical small Δn (=0.08). On the contrary, in the prior 45° twisted type device mentioned before, the minimum thickness of the liquid crystal is less than 2 µm, thus degrading uniformity and manufacturing yield of the element.

As shown in Fig. 1, the front electrode type device which does not form any picture elements may be used as electrically controlled anti-glaring mirrors for automobiles and light shutters. Particularly, in an application to an electrically controlled anti-glaring mirror, a high reflectivity effect in a transparent state is recognized in comparison with the conventional dichroic pigment type device and the TN type device mounted with polarizing plates on both sides thereof.

The low loss in light amount provides advantageously color images by using a color filter even under a dim illumination, for example, a circumstance with no back light. This results from that the display glows brightly because the lower polarizing light plate and the diffusion type reflection plate are not needed in the conventional TN type reflection liquid crystal element (in a transmission type mode in principle).

As shown by the broken lines in Fig. 3, a sharp optical response to voltage is obtained at a large twist angle of 193°. In this case, the ratio SAT/VTH of an electric field VTH at 90% reflectivity and an electric field SAT at 10% reflectivity is a value of 1.08. Hence, even if an electric field applied across the liquid crystal layer represents small variation in an effective value, the liquid crystal responds sufficiently and makes possible a display with high contrast. This shows that a multiplex driving is capable of being performed with a XY matrix as well as conventional liquid crystal elements.

With the wavelength of a turned light, the conditions described in the present embodiment will be shifted. The ratio is approximately λ (nm)/550 and is roughly proportional to λ. For example, with a twist angle of 193°, the optimum value with respect to a wavelength of 550nm is 0.58. However, if Δnd = 0.45 to 0.75 or 0.95λ ≤ Δnd ≤ 1.15λ (λ in µm), with respect to any wavelength of a visible light ray, the reflectivity is able to be adjusted at its peak value. Also, in order to make the variations in performance at 550nm to an off reflectivity of less than 10%, Δnd is 0.52 to 0.64 and the twist angle of the liquid crystal molecules is 175° to 210°. There are the same conditions at a twist angle of 60°. Δnd ranges from 0.14 to 0.25, or 0.33λ ≤ Δnd ≤ 0.4λ. The twist angle is 53° to 78° under an off reflectance of less than 10%.

### EXAMPLE 2

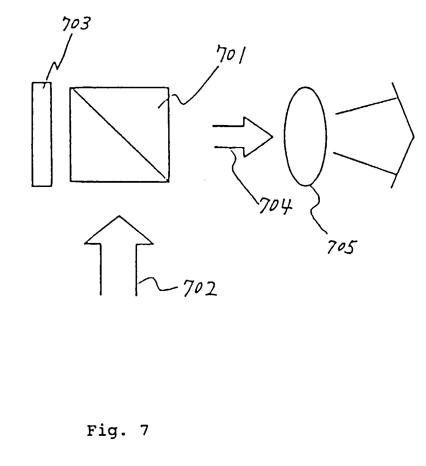

Fig. 7 is a structural diagram of a reflection type liquid crystal electro optical device using a polarizing beam splitter (hereinafter referred to PBS) as a polarizer.

The PBS 701 polarizes linearly a source light 702 to illuminate it onto the liquid crystal panel 703. In the structure of the liquid crystal panel, the light travelling process is the same as that of the embodiment 1. The PBS is a means for detecting a transmitted light and passes out a linearly polarized light which has a shifted angle of 90° with respect to the incident light. For this reason, the output light reflected is stopped with no electric field, and the applied voltage to reflectivity characteristic is symmetric to the ordinate axis of Fig. 3 in the embodiment 1. The transmitted light 704 is projected with the projection optical system 705.

### EXAMPLE 3

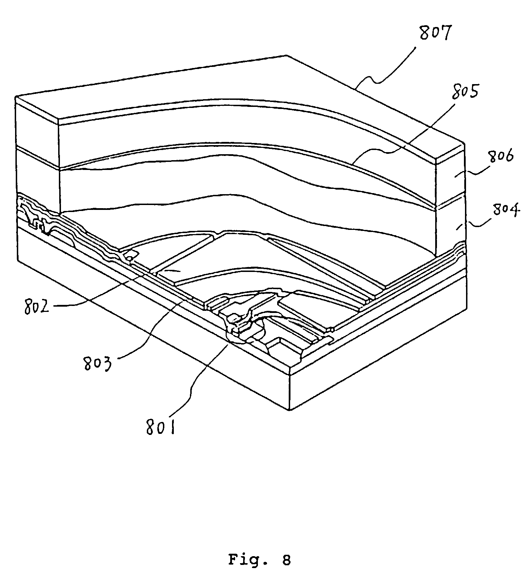

Fig. 8 is a cross sectional view showing a reflection type electro optical device addressed by an active matrix. Fig. 8 shows an example arranging MOS transistors at each picture element. Numeral 802 is a picture element electrode, 803 is a liquid crystal layer, 805 is a transparent electrode formed by deposition onto the opposite transparent substrate 806, and 807 is a polarizing plate. The device used here is described in NIKKEI ELECTRONICS (1981) issued on February 16, on page 164. Table 1 shows the detailed specification.

**TABLE 1**

| | |
|---|---|
| Picture element number | 220 x 320 |
| Picture element pitch | 80 x 90 µm |
| Drive voltage | ± 4V (on X side) |
| | 12 V (on Y side) |
| Display mode | TN-ECB (Electrically controlled birefringence) |
| Thickness of liquid crystal | 2.24 µm |
| Δnd | 0.2 |
| Twist angle | 63° |
| Substrate | Opaque semiconductor substrate (Si) |
| Reflection surface (Electrode) | Al (with over-coated SiO₂) |
| Process | CMOS |
| Picture element tran-transistor | NMOS transistor |
| Gate | Poly-silicon |
| Shift register | Static |

With the use of the reflection display mode, as shown in Fig. 8, the metallization (wirings) and active elements are able to be arranged under the picture elements. This arrangement makes large the aperture ratio (opening ratio) of a picture element (or actual picture element) to the picture element area in spite of the existence of metallization and active elements, thus preventing a decrease in the opening area due to an increasing number of picture elements.

Furthermore, in addition to picture image elements and active elements, peripheral driving circuits such as shift registers and the like for distributing picture element information can be incorporated on the same Si substrate.

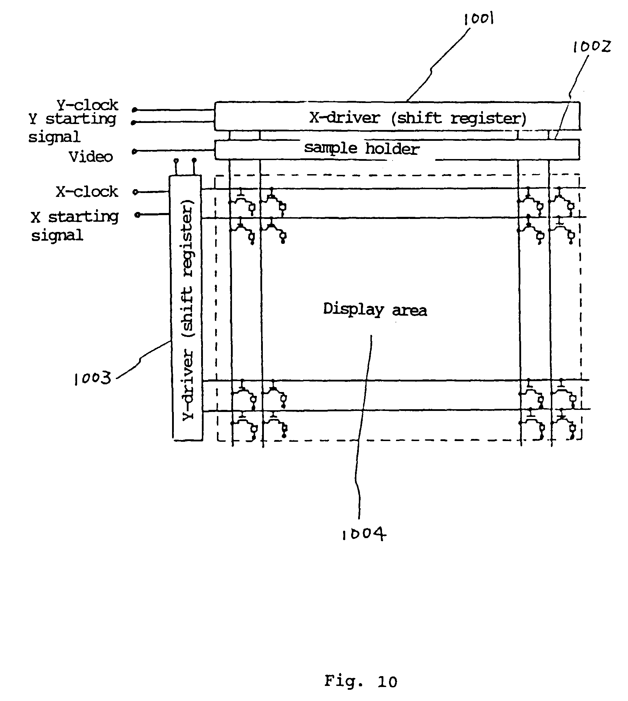

Fig. 10 is a structural diagram. On the X side, a 320-stage shift register 1001 and a sample holder 1002 are formed and on the Y side, a 220-stage shift register 1003 is formed round the display area 1004. These are formed by a CMOS manufacturing process.

In the transparent type structure, there is a limitation due to the width of wiring, as an aperture ratio is increased. According to the present invention, since metal wiring of low resistance can be arranged under the picture element electrodes without any limitation to a circuit design rule, the drop of a transmission band width due to wiring resistance is prevented.

Also, in comparison with other liquid crystal display modes, the device of the present invention has lower light amount loss than a guest/host type device. The device of the present invention does not require any polarizer and diffusion type reflection plate on the lower side of a prior art TN type reflection liquid crystal element. For this reason, a bright color picture image is obtained under dim light, using color filters.

The thin liquid crystal layer enables to increase the holding capacitance of the liquid crystal layer advantageously.

Furthermore, the reflection type device has an advantage that a heat sink and a temperature controller can be mounted on the opposite surface because the light input surface acts as the light output surface.

A sharp threshold characteristic to electric field is obtained by varying the twist conditions, so that a display with a high contrast is possible without making the switching ratio of the transistor large. In the embodiment, MOS transistors are used on a Si substrate. However, TFT transistors may be employed in place of the MOS transistors.

### EXAMPLE 4

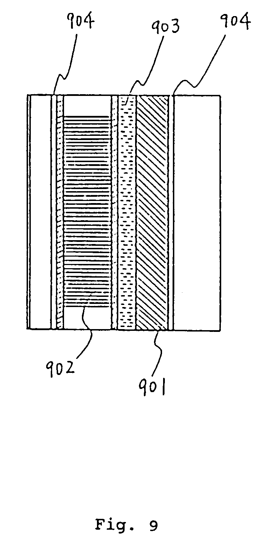

Fig. 9 is a cross sectional view of a reflection type electro optical device which is written by means of light. A photo conductive layer 901 varies its resistance by means of light to control the electric field across the liquid crystal layer 902. Numeral 903 is a reflection mirror in a dielectric mirror structure. Numeral 904 is a transparent electrode to apply an electric field. Such device is disclosed in JP-A-56-43681 and the paper J. Opt. Soc. Am., Vol.70, No. 3,287 (1980). However, the device according to the present invention uses two conditions: one being Δnd of 0.2 and a twist angle of 60° and the other being Δnd of 0.53 and a twist angle of 180°. This enables high of reflectivity in an optimum arrangement of a PBS.

Table 2 shows a detailed constitution. In the embodiment according to the present invention, an intrinsic amorphous silicon with a small amount of boron is used as a photo conductive layer. However, a PIN structure may be used. Also, CdS, Se, OPC, monocrystalline silicon, BSO or the like is a good material for the photo conductive layer.

Varying the twist conditions makes the threshold characteristics sharp and enables a high contrast display even if the switching ratio of the photo conductor is small.

**TABLE 2**

| | |
|---|---|
| Photo conductor | a-Si by plasma CVD process (A small amount of boron doped intrinsic) |
| Dielectric mirror | Si/SiO₂ dielectric multi-layer mirror |
| Liquid crystal | TN-ECB (Electrically controlled birefringence) turned at 550nm |
| Polarizing means | PBS |
| Transparent substrate | Corning 7059 glass |
| Transparent electro-trode | ITO (Indium Tin Oxide) Spattered film |

### EXAMPLE 5

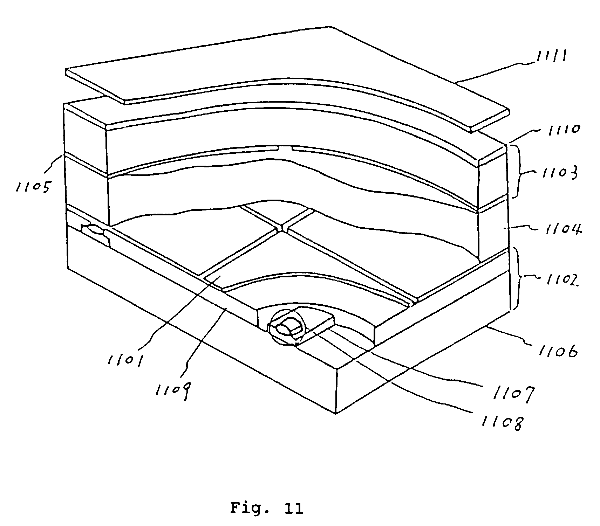

Fig. 11 is a cross sectional view of a reflection type electro optical device using MIM elements. A liquid crystal 1104 is sandwiched between the MIM substrate 1102 and the opposite substrate 1103. The MIM substrate 1102 mounts a reflective picture element electrode 1101. Numeral 1105 is a transparent electrode for applying an electric field to the liquid crystal layer. The electrode 1105 is in the form of a stripe corresponding to the picture element size. The MIM substrate comprises a signal transmission wiring 1107 in line form over a substrate 1106, a MIM element 1108 of a thin insulator formed on a portion of the wiring 1107 and a picture element electrode 1101 electrically connected to the MIM element.

The picture element electrode also can act as the other metal thin film of the MIM element and a reflective film of an electro optical element. Numeral 1110 is a anti-reflection coating and 1111 is a polarizing element.

Table 3 shows a more concrete configuration.

**TABLE 3**

| GENERAL | |
|---|---|
| Picture element number | 220 x 320 |
| Picture element pitch | 80 x 90 µm |
| MIM SUBSTRATE | |
| MIM element | Ta-Ta₂O₅-Cr |
| | Ta₂O₂ 500 Å |
| Oxidation process | Wet anodizing process |
| Signal transmission wiring | Ta |
| Picture element electrode | Cr reflection film |
| Layered insulator | Polyimide |
| DISPLAY MODE | TN-ECB (Electrically controlled birefringence) |
| Liquid crystal layer | |
| thickness | 2.4 µm |
| Δnd | 0.2 |
| Twist angle | 63° |

With the use of such a reflective display mode, the wiring and the MIM elements can be mounted under the picture element electrodes, as shown in Fig. 11. This structure can make large the aperture ratio (opening ratio) of an actual picture element electrode to a picture element area in spite of the existence of wiring and active elements, thus preventing a decrease in an aperture ratio due to an increase in the picture element number.

In the transparent type device, the wiring width is limited to an increase of an aperture ratio. However, in this invention, the transmission range is not degraded due to the wiring resistance because a thick metal wiring can be arranged under the picture electrode.

Also, the element mounting substrate does not use three terminal elements such as TFTs which need two or more crossed wirings, but uses only no crossed wiring, whereby a defect due to a short circuit between crossed wirings does not occur.

The thin thickness of a liquid crystal layer increases advantageously the holding capacitance of the liquid crystal layer. An intrinsic semiconductor which has a larger band gap than that of a conventional semiconductor such as Si is used to provide essentially good light tolerance. The reflection type structure can seal completely a semiconductor portion of the element to incident light to further improve light tolerance.

Furthermore, the device according to the present invention provides lower loss in light amount in comparison with the guest host type device. The device of this invention also has an advantage that a bright color image is obtained under dim illumination using color filters because any polarizer and diffuser which are put under the substrate and used for a prior art TN type reflection liquid crystal element (using a transparent mode in principle) are not used.

A sharp threshold characteristic to electric field is obtained by varying the twist condition so that a display with high contrast is provided without making the switching ratio of a MIM element large.

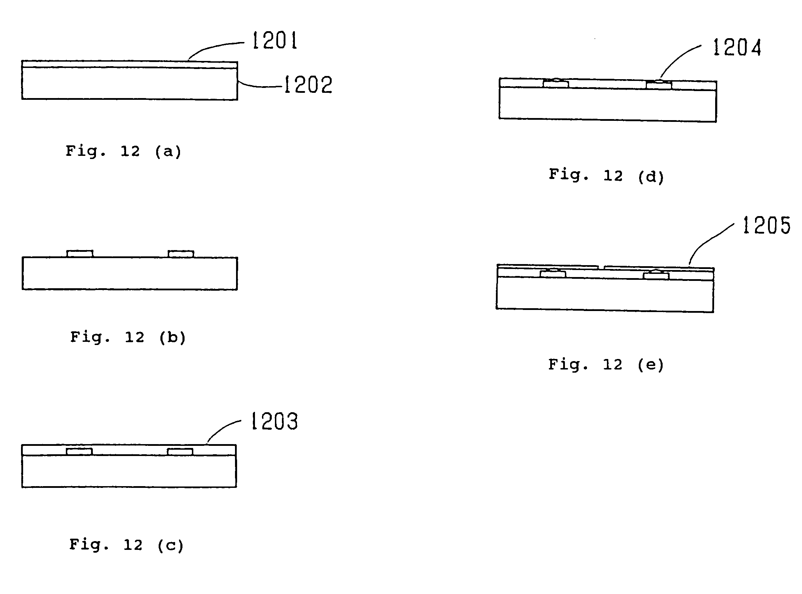

As shown in Fig. 11, a reflection type display device is formed through a peculiar manufacturing process and has a different structure from a conventional MIM type element. Next, this manufacturing process will be explained. Figs. 12(a), 12(b), 12(c), 12(d) and 12(e) are diagrams showing manufacturing steps.
a.) A thin film 1201 of Ta, or one metal for a MIM element, is deposited on the substrate 1202 (see Fig. 12(a)).
b.) The Ta thin film is photo-etched into a stripe pattern (see Fig. 12(b)).
c.) A layered insulator 1203 is coated (see Fig. 12(c)). In the example, a photo sensitive polyimide is spin-coated, but an inorganic insulator may be used instead.
d.) A MIM element forming region is exposed with a photo-etching process to be selectively anodized. Here, a Ta₂O₅ 1204 of about 500 Å is formed with a wet process (see Fig. 12(d)).
e.) Cr 205, or another metal for the MIM element, is deposited in vapor phase, and then a picture element electrode is formed by photo etching (see Fig. 12(e)).

In this embodiment, in order to simplify the process, Cr, one metal for a MIM element, is used for a picture element electrode. In case of a need for a higher reflectivity, a film of Al, Ag or the like may be used effectively for the picture element electrodes.

Furthermore, in the patterning for the signal transmission line, the rule is eased to simplify the process.

### EXAMPLE 6

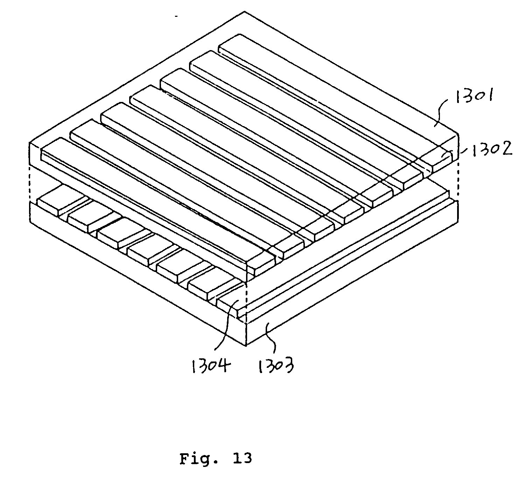

Fig. 13 shows a simple X-Y matrix type liquid crystal panel using the reflection type liquid crystal electro optical device of the present invention. Numeral 1301 is a transparent substrate such as glass or the like, 1302 is a transparent electrode such as ITO, 1303 is an Al electrode on the opposite substrate 1304. Like the reflection type liquid crystal electro optical device shown in Fig. 1, the surfaces of the transparent 1302 and the Al electrode 1304 are processed for orientation and a nematic liquid crystal is held by means of a spacer therebetween. The condition as to the thickness of the liquid crystal layer and to the twist angle of the liquid crystal molecules is the same as that of the 193° TN described in the example 1. Like a transparent type simple matrix liquid crystal panel, the liquid crystal molecules with a small twist angle bring a low contrast when a number of picture elements are operated at a high duty drive operation. However, according to the reflection type liquid crystal electro optical device shown in the present embodiment, good contrast is provided because of its sharp threshold characteristics with respect to electric field.

### EXAMPLE 7

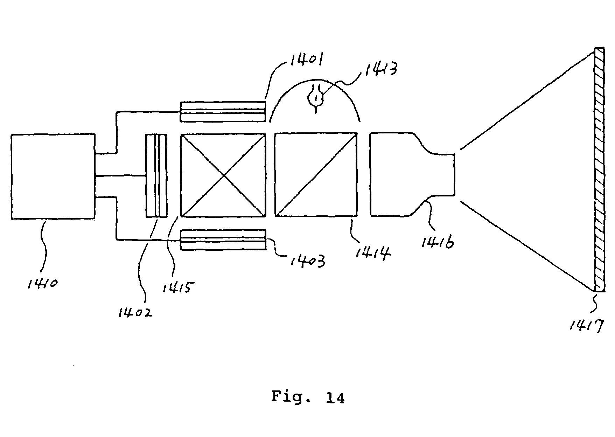

Fig. 14 is a structural diagram showing a projection type display apparatus using a plurality of a reflection type liquid crystal electro optical device according to the present invention.

The reflection type liquid crystal electro optical devices 1401, 1402 and 1403 may be formed like those shown in the embodiments 1, 2, 3, 5 or 6. Here, a reflection type liquid crystal electro optical device using the transistors described in the embodiment 3 as a driving active element is utilized.

Numeral 1410 is a signal source for driving a reflection type liquid crystal electro optical device. After an image video signal is demodulated and then separated into an R signal, a B signal and a G signal, each of the signals is supplied to a corresponding one of the reflection type liquid crystal electro optical devices to display a monochrome image. As described in the embodiment 1, while a light applied on the liquid crystal layer is reflected back at the reflective film, it is subjected to retardation during transmission by the liquid crystal to form a picture image. In this way, a picture image corresponding to the R, G and B signals of a picture image to be displayed is formed on the corresponding one of the reflection type liquid crystal electro optical devices 1401, 1402 and 1403. Numeral 1413 is a readout light source for visualizing the above picture image information, and for example a Xenon lamp, Halogen lamp, Metal halide lamp, or the like. The readout light source with a reflector provides a high light utilization efficiency. An infrared filter may be added to isolate heat absorbed in the reflection type liquid crystal electro optical devices and other optical components. An ultra violet cut filter may be added to prevent the degradation of the liquid crystal in a reflection type liquid crystal electro optical device. The readout light generated from the readout light source 1413 is separated into P and S polarized light with a polarizing beam splitter 1414. Fig. 14 shows that a S polarized light component reflected by the polarizing beam splitter is used for displaying. In the display of the P polarized light component, the above mentioned readout source may be replaced in position by a projection lens to be described later. The replacement is also applicable to the following apparatus. The polarizing beam splitter 1414 is desirable to have good polarization characteristics over a whole range of visible light and to maintain sufficiently a whiteness of the light generated out of a light source. A light passed through the polarizing beam splitter 1414 enters into the dichroic prism 1415 acting as a dichroic element, and is separated into three colors RGB. The monochromatic light is illuminated onto a reflection type liquid crystal electro optical device. The dichroic prism 1415 comprises four rectangular prism blocks combined with each other. A dielectric multi film is coated on the contact surface of each block and acts as two kinds of perpendicularly crossed wavelength separation surfaces. The dielectric multi film formed on one contact surface is designed so as to reflect a light of a wavelength corresponding to red (R) in white light and so as to pass the remaining wavelengths of it. The dielectric multi layer formed on the opposite surface is designed so as to reflect a light of a wavelength corresponding to blue (B) in the white light and so as to pass the remaining wavelengths of it. Hence, the light passed through the polarizing beam splitter 1414 is separated in accordance with the wavelengths by the dichroic prism 1415 and the reflected red (R) and blue (B) lights and the transmitted green (G) light are separately illuminated to the electro optical devices. As described before, the picture image light is specially modulated with the electro optical devices 1401, 1402 and 1403 which form picture images corresponding to the colors RGB, and enters into the dichroic prism. The light which contains picture image information of green (G) passes through the dichroic prism without change, and the light which contains picture image information of red (R) and blue (B) are reflected by the dielectric multi film on the dichroic prism. Then, the RGB light is synthesized and again is applied onto the polarizing beam splitter. In the synthesized light which is applied onto the polarizing beam splitter, only a light component with a 90° rotated polarization with respect to the incident light which is applied onto the liquid crystal electro optical device passes to project an image on the screen 1417 with the projection lens 1416.

Fig. 14 shows an example of an arrangement of a very compact projection optical apparatus. Instead of the dichroic prisms, dichroic mirrors in a parallel or vertical position may be used for the RGB separation and synthesis. In this case, the reflection type liquid crystal electro optical devices can provide a good advantage to realize a unique projection type display apparatus.

As described in the embodiment 1, since both the polarizer and the analyzer can be used as a polarizing element, a polarizing plate can be arranged in place of the PBS of Fig. 4 and the optical system can be further simplified by adding means for separating into a light source light and a transmitted light (for instant schlieren stop means).

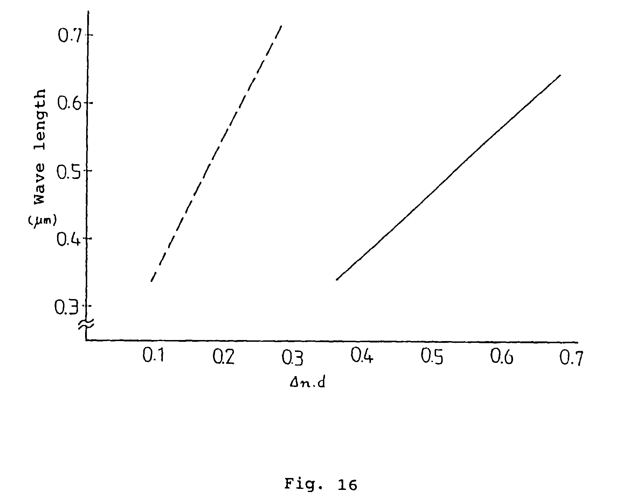

In an electro optical device used for the projection type display device shown by the present embodiment, the TN layer is used under conditions of a twist angle of 60° and Δnd = 0.2, as well as a twist angle of 193° and Δnd = 0.58. With respect to the wavelength of a light monochromed with a dichroic prism, the Δnd of each of the reflection type liquid crystal electro optical devices is optimized. Furthermore, a detailed study on the conditions of the 193° TN showed clearly the relationship between a wavelength with a peaked reflectivity and Δnd, as shown in Fig. 16.

In a reflective liquid crystal electro optical device with liquid crystal molecules of which the twist angle is set at 193°, Fig. 16 shows the reflectivity in case of no electric field measured with a polarizing beam splitter. In Fig. 16, the solid line is a plot of a wavelength with respect to Δnd, with the wavelength providing a peaked reflectivity in case of no electric field. The center wavelength λ separated with the dichroic prism shown in the present embodiment is 630 nm in the liquid crystal reflective electro optical device 1401 for red. In the device 1402 for green, λ is 550nm. In the device 1403 for blue, λ is 480nm. Hence, if 0.95λ ≤ Δnd ≤ 1.15λ, the influence on a color intensity of a picture image formed may be ignored. If Δnd = 0.65 in the device 1401, Δnd = 0.58 in the device 1402, and Δnd = 0.50 in the device 1403, each of the liquid crystal electro optical devices provides the highest reflectivity to the wavelength of a light applied and can display improved picture image in color reproductivity.

The broken line of Fig. 16 shows the relationship between a Δnd and a wavelength with a peaked reflectivity, in a prior art liquid crystal reflective liquid optical device using liquid crystal molecules with a twist angle of 45°. In comparison with the reflection type liquid crystal electro optical device with the characteristics shown by the solid line, the above device has a peak wavelength for the reflectivity sensitive with respect to the Δnd variations, and has a gap margin for a liquid crystal layer for optimizing the reflection type liquid crystal electro optical device in accordance with the separation characteristics of the dichroic prism, whereby the color intensity of a displaying picture image is degraded. On the other hand, in the reflection type liquid crystal electro optical device according to the present invention, a variation in the peak wavelength for the reflectivity is moderate with respect to the Δnd variations, so that the optimization is easy.

### EXAMPLE 8

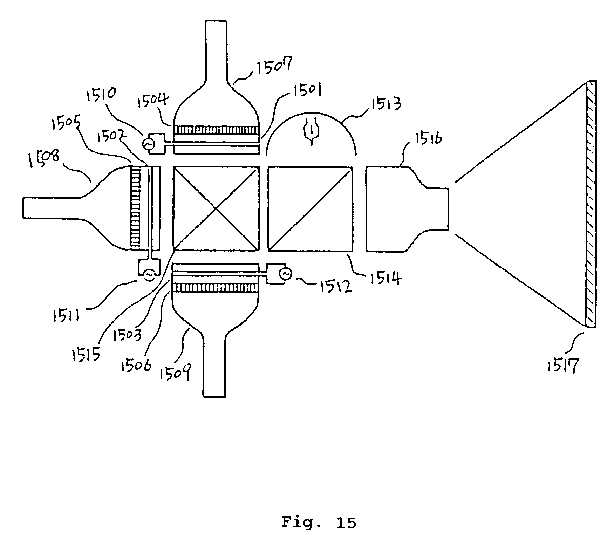

Fig. 15 is a structural diagram showing a projection type display apparatus using a plurality of a reflection type liquid crystal electro optical devices addressed by a photo conductor.

The light recording type reflective liquid crystal electro optical devices 1501, 1502 and 1503 include a liquid crystal layer and a photo conductive layer and form optically a picture image. They are shown in the embodiment 4, Fig. 9 and Table 2, respectively.

Numerals 1504, 1505 and 1506 are erect equal magnifying projection optical systems each of which couples optically a reflection type liquid crystal electro optical device with the screens of cathode ray tubes 1507, 1508 and 1509 as picture image supplying means. In the concrete example, a rod lens array of which a plurality of refractive index distribution type rod lenses is arranged in plane is used. Instead of the rod lens array, coupling means using an erect equal magnifying projection optical system may be used which comprises a plurality of micro lens arrays. The lens array is formed of a plurality of horizontally arranged micro lenses each of which has refractive index distribution characteristics. Also, a fiber with a plurality of holes of a small diameter may be coupled with a fiber micro plate arranged horizontally. Numerals 1510, 1511 and 1512 are power supplies for driving respective reflection type liquid crystal electro optical devices 1501, 1502 and 1503. The cathode ray tubes 1507, 1508 and 1509 display separately picture images based on picture image RGB signals from a video signal source (not shown). The picture image is guided to respective reflection type liquid crystal electro optical devices by the above mentioned rod lens array to project onto a photo conductive layer. After different video signals supplied to different cathode ray tubes demodulate a common video signal in color to separate into RGB signals, each color is supplied to a respective cathode ray tube and a monochrome picture image of a component of each of the RGB signals is displayed on each of the cathode ray tubes. An incident light on the photo conductive layer varies its impedance, so that the impedance ratio between the photo conductive layer and the liquid crystal layer varies. As a result, almost all the voltage is applied to the photo conductive layer in the dark state. In the illuminated state, the voltage is applied to the liquid crystal layer, and the liquid crystal changes its orientation. As described in the embodiment 1, while the light irradiated through the liquid crystal layer is reflected back by a dielectric multi layered mirror and emitted out, it is subjected to retardation to form a picture image. In this way, the reflection type liquid crystal electro optical devices 1501, 1502 and 1503 display picture image information corresponding to the RGB signals of a picture image to be displayed, respectively. The projection optical system, which is the same as that in the embodiment 7, comprises a readout light source 1513 for visualizing the above mentioned picture image information, a polarizing beam splitter 1514, a dichroic prism 1515 as a dichroic element, a projection lens 1516 and a screen 1517.

In the electro optical system using the projection type display device shown in the present embodiment, the TN layer is used under the conditions described in the embodiment 7.

The present embodiment uses a cathode ray tube as means for writing a picture image onto the reflection type liquid crystal electro optical device. However, a laser beam modulated by a video signal may be used for writing into a photo conductive layer by scanning in two dimensions a polygon scanner, an acoustic optical modulator, a galvano scanner or the like. The present invention is applicable to a wide variety of reflection type photo control apparatus in addition to the present embodiments.

### INDUSTRIAL APPLICABILITY

In comparison with a prior art device, the above described present invention allows a large Δnd value and a large margin to the thickness of a liquid crystal layer in manufacture. Also, the use of a nearly linearly polarized light enables effectively low loss in light amount.

Also, since signal transmission lines and active elements can be arranged under the picture electrodes, the aperture ratio does not decrease due to the picture element driving means (such as TFTs), whereby the light amount loss is effectively decreased.

The reflective display mode enables the use of an untransparent silicon substrate and can effectively integrate a peripheral circuit such as a driver circuit. This leads to a simple assembly, low cost and improved reliability. Also, since signal transmission lines and active elements can be arranged under the picture element electrodes, the light resistance and thermal conduction are effectively improved.

Furthermore, since signal transmission lines and active elements can be arranged under the picture element electrodes, the minimum dimension rule in manufacture can be related to adopt effectively a simplified manufacturing process.

The variation in the twist condition allows a control of the threshold characteristics with respect to electric field. The sharp transition of the threshold enables a secure response to a small change in the effective voltage value, a high duty driving of a simple matrix type liquid crystal panel, and a high contrast display of an active element type liquid crystal panel with a small switching ratio of a transistor or a MIM element. Contrary, a moderated threshold value enables the half tone display and eases handling a tone signal such as a video signal.

The low loss in light amount provides an advantage that a color picture image is obtained under dim illumination, for example, an atmosphere with no back light, by using a color filter. This results from that, there is no need of any polarizing plate and diffusing plate used in a prior art TN type reflective liquid crystal element provides bright display.

According to the present invention, since a peaked reflectivity of the liquid crystal electro optical device can be adjusted readily by turning the wavelength of a monochrome light with a dichroic element, a color intensity of a display picture image is improved, and the obtained picture image is close to natural color. Also, an optimization in the twist angle of liquid crystal molecules improves the contrast, the utilization of light flux of a light source light and the picture image quality.

In addition, the use of a large opening ratio improves the light flux utilization. The improved light flux utilization can decrease the light amount of a light source, and decreases a temperature rise of a liquid crystal electro optical device due to an incident light. Furthermore, this increases effectively the reliability and operational life of the liquid crystal electro optical devices and projection type display systems. The use of the reflection type liquid crystal electro optical device enables the spaces for illumination system and projection system to be shared, and can realize a compact optical system.

## Claims

1. A reflection type liquid crystal electro-optical device comprising:
a first and a second substrate (101, 103) opposing each other, of which at least the first substrate (101) is transparent,
a twisted nematic liquid crystal layer (104) sandwiched between said substrates and having a finite twist angle,
means arranged so as to apply to said first substrate (101) linearily polarized input light having its direction of polarization either **substantially** in parallel with or **substantially** perpendicular to the director of the liquid crystal layer at the interface to said first substrate (101),
a reflective surface (102) arranged to reflect said input light after it has passed at least said first substrate and said liquid crystal layer (104), and
means (105; 102) arranged to electrically control said liquid crystal layer (104) to assume either an off-state or an on-state,
wherein the value of the twist angle and the value Δnd of said liquid crystal layer (104) are selected such that, in said off-state, for a selected wavelength said linearly polarized input light, after having passed the liquid crystal layer, is turned to substantially circularly polarized light at said reflective surface, and the circularly polarized light after having been reflected at said reflective surface and again passed the liquid crystal layer is emitted as linearly polarized output light whose direction of polarization is orthogonal to that of said input light,
wherein d is the thickness of the liquid crystal layer (104) and Δn is the anisotropy of its refractive indices.

2. The device according to claim 1, wherein said liquid crystal layer has a twist angle of approximately 63° and 0.33λ ≤ Δnd ≤ 0.4λ or a twist angle of approximately 193° and 0.95λ ≤ Δnd ≤ 01.15λ,
λ being the value of said selected wavelength in µm.

3. The device according to claim 1 or 2, wherein active elements for controlling an electric field to be applied to the liquid crystal layer are provided on said second substrate (103).

4. The device according to claim 3, wherein said second substrate (103) is an untransparent semiconductor substrate.

5. The device according to claim 3 or 4, wherein a driver circuit for distributing picture element information is formed on said second substrate (103).

6. The device according to claim 3, 4 or 5, wherein reflective picture element electrodes are formed on said second substrate (103).

7. The device according to any one of claims 3 to 6, wherein said second substrate (103) comprises active elements, signal transmission lines, an interlayer insulator formed on the signal transmission lines and reflective picture element electrodes formed on the insulator.

8. The device according to claim 3, wherein one electrode of each active element is a reflective picture element electrode.

9. A reflection type liquid crystal electro-optical device according to claim 3, wherein said active elements are MIM elements.

10. The device according to claim 1 wherein
a first transparent electrode layer (904) is provided on the side of said first substrate facing the liquid crystal layer (902),
said second substrate is transparent, and
a dielectric mirror (903), a photoconductive layer (901) and a second transparent electrode layer (904) are provided in this order between the liquid crystal layer (902) and the second substrate.

11. A projection type color display apparatus comprising a plurality of the electro-optical devices claimed in any one of the preceding claims.

12. The apparatus according to claim 11, wherein three of said electro-optical devices are provided, said apparatus further comprising:
a dichroic element (1415) for separating incident read-out light into three light beams of different wavelengths corresponding to red, green and blue, respectively, each light beam to be applied as incident light to a different one of the three reflection type liquid crystal electro-optical devices, and for synthesizing the light beams reflected and image modulated by the three reflection type liquid crystal electro-optical devices.

13. The apparatus according to claim 12, wherein said dichroic element (1415) has two kinds of wavelength selection surfaces perpendicularly intersecting each other.

14. The apparatus according to claim 12 or 13 wherein the liquid crystal electro-optical devices of claim 10 are used, the apparatus further comprising an erect equal magnification imaging optical system (1504, 1505, 1506) for projecting respective images from image supplying means (1507, 1508, 1509) onto the photoconductive layer of each of said plurality of liquid crystal electro-optical devices.

## Patentansprüche

1. Elektro-optische Flüssigkristallvorrichtung des Reflexionstyps, umfassend:
ein erstes und ein zweites Substrat (101, 103), die einander gegenüberliegen und von denen wenigstens das erste Substrat (101) transparent ist,
eine verdrillte nematische Flüssigkristallschicht (104), die zwischen den Substraten eingeschlossen ist und einen endlichen Verdrillungswinkel aufweist,
Mittel, die so angeordnet sind, daß sie dem ersten Substrat (101) linear polarisiertes Eingangslicht zuführen, dessen Polarisationsrichtung entweder im wesentlichen parallel oder im wesentlichen senkrecht zu dem Direktor der Flüssigkristallschicht an der Grenzfläche des ersten Substrats (101) ist,
eine reflektierende Oberfläche (102), die so angeordnet ist, daß sie das Eingangslicht, nachdem es wenigstens das erste Substrat und die Flüssigkristallschicht (104) durchlaufen hat, reflektiert, und
Mittel (105; 102), die so angeordnet sind, daß sie die Flüssigkristallschicht (104) elektrisch zur Annahme entweder eines Aus-Zustands oder eines Ein-Zustands steuern,
wobei der Wert des Verdrillungswinkels und der Wert Δnd der Flüssigkristallschicht (104) so gewählt sind, daß in dem Aus-Zustand für eine ausgewählte Wellenlänge das linear polarisierte Eingangslicht, nachdem es die Flüssigkristallschicht durchlaufen hat, an der reflektierenden Oberfläche zu im wesentlichen zirkular polarisiertem Licht gewandelt wird und das zirkular polarisierte Licht nach Reflexion an der reflektierenden Oberfläche und erneutem Durchlauf durch die Flüssigkristallschicht als linear polarisiertes Ausgangslicht emittiert wird, dessen Polarisationsrichtung orthogonal zu der des Eingangslichts ist,
wobei d die Dicke der Flüssigkristallschicht (104) und Δn die Anisotropie seiner Brechzahlen sind.

2. Vorrichtung nach Anspruch 1, bei der die Flüssigkristallschicht einen Verdrillungswinkel von ungefähr 63° aufweist und 0,33 λ ≤ Δnd ≤ 0,4 λ ist oder einen Verdrillungswinkel von ungefähr von 193° aufweist und 0,95 λ ≤ Δnd ≤ 1,15 λ ist, wobei λ der Wert der ausgewählten Wellenlänge in µm ist.

3. Vorrichtung nach Anspruch 1 oder 2, bei der aktive Elemente zur Steuerung eines an die Flüssigkristallschicht anzulegenden elektrischen Feldes auf dem zweiten Substrat (103) vorgesehen sind.

4. Vorrichtung nach Anspruch 3, bei der das zweite Substrat (103) ein lichtundurchlässiges Halbleitersubstrat ist.

5. Vorrichtung nach Anspruch 3 oder 4, bei der eine Treiberschaltung zur Verteilung von Bildelementinformation auf dem zweiten Substrat (103) ausgebildet ist.

6. Vorrichtung nach Anspruch 3, 4 oder 5, bei der reflektierende Bildelementelektroden auf dem zweiten Substrat (103) ausgebildet sind.

7. Vorrichtung nach einem der Ansprüche 3 bis 6, bei der das zweite Substrat (103) aktive Elemente, Signalübertragungsleitungen, einen Zwischenschichtisolator, der auf den Signalübertragungsleitungen ausgebildet ist, und reflektierende Bildelementelektroden, die auf dem Isolator ausgebildet sind, aufweist.

8. Vorrichtung nach Anspruch 3, bei der eine Elektrode jedes aktiven Elements eine reflektierende Bildelementelektrode ist.

9. Elektro-optische Flüssigkristallvorrichtung des Reflexionstyps nach Anspruch 3, bei der die aktiven Elemente MIM-Elemente sind.

10. Vorrichtung nach Anspruch 1, bei der
eine erste transparente Elektrodenschicht (904) auf der der Flüssigkristallschicht (902) zugewandten Seite des ersten Substrats vorgesehen ist,
das zweite Substrat transparent ist, und
ein dielektrischer Spiegel (903), eine fotoleitfähige Schicht (901) und eine zweite transparente Elektrodenschicht (904) in dieser Reihenfolge zwischen der Flüssigkristallschicht (902) und dem zweiten Substrat vorgesehen sind.

11. Projektionsfarbanzeigegerät umfassend mehrere der elektro-optischen Vorrichtungen, die in einem der vorhergehenden Ansprüche beansprucht sind.

12. Gerät nach Anspruch 11, bei dem drei der elektro-optischen Vorrichtungen vorgesehen sind, wobei das Gerät ferner umfaßt:
ein dichroitisches Element (1415) zur Auftrennung von einfallendem Ausleselicht in drei Lichtstrahlen unterschiedlicher Wellenlängen entsprechend Rot, Grün bzw. Blau, jeder Lichtstrahl zum Zuführen als Einfallicht zu einer anderen der drei elektro-optischen Flüssigkristallvorrichtungen des Reflexionstyps, und zum Zusammenführen der drei Lichtstrahlen, die von den drei elektro-optischen Flüssigkristallvorrichtungen des Reflexionstyps reflektiert und bildmäßig moduliert wurden.

13. Vorrichtung nach Anspruch 12, bei der das dichroitische Element (1415) zwei Arten sich senkrecht schneidender Wellenlängenselektionsoberflächen aufweist.

14. Vorrichtung nach Anspruch 12 oder 13, bei der die elektro-optischen Flüssigkristallvorrichtungen von Anspruch 10 verwendet werden und das Gerät ferner ein optisches Abbildungssystem (1504, 1505, 1506) mit aufrechter gleicher Vergrößerung zur Projektion jeweiliger Bilder von Bildliefermitteln (1507, 1508, 1509) auf die fotoleitfähige Schicht jeder der mehreren elektro-optischen Flüssigkristallvorrichtungen aufweist.

## Revendications

1. Dispositif électro-optique à cristaux liquides du type à réflexion comprenant :
un premier et un deuxième substrats (101, 103) opposés l'un à l'autre, dont au moins le premier substrat (101) est transparent,
une couche de cristaux liquides (104) nématique torsadés prise en sandwich entre les substrats et présentant un angle de torsion fini,
des moyens destinés à appliquer au premier substrat (101) une lumière d'entrée polarisée linéairement ayant son sens de polarisation soit sensiblement parallèle à soit sensiblement perpendiculaire au directeur de la couche de cristaux liquides à l'interface du premier substrat (101),
une surface réfléchissante (102) disposée pour réfléchir la lumière d'entrée après qu'elle a traversé au moins le premier substrat et la couche de cristaux liquides (104), et
des moyens (105 ; 102) destinés à commander électriquement la couche de cristaux liquides (104) pour prendre soit un état fermé, soit un état ouvert, dans lequel la valeur de l'angle de torsion et la valeur Δnd de la couche de cristaux liquides (104) sont sélectionnées de telle manière que, dans l'état fermé, pour une longueur d'onde sélectionnée la lumière d'entrée polarisée linéairement, après avoir traversé la couche de cristaux liquides, est transformée en lumière polarisée de façon sensiblement circulaire sur la surface réfléchissante, et la lumière polarisée de façon circulaire après avoir été réfléchie sur la surface réfléchissante et avoir retraversé la couche de cristaux liquides est émise en tant que lumière de sortie polarisée linéairement dont le sens de polarisation est orthogonal à celui de la lumière d'entrée,
dans lequel d est l'épaisseur de la couche de cristaux liquides (104) et Δn est l'anisotropie de ses indices de réfraction.

2. Dispositif selon la revendication 1, dans lequel ladite couche de cristaux liquides présente un angle de torsion d'environ 63° et 0,33λ ≤ Δnd ≤ 0,4λ ou un angle de torsion d'environ 193° et 0,95λ ≤ Δnd ≤ 01,15λ, la valeur de λ étant la longueur d'onde sélectionnée en µm.

3. Dispositif selon la revendication 1 ou 2, dans lequel des éléments actifs destinés à commander un champ électrique à appliquer à la couche de cristaux liquides sont prévus sur le deuxième substrat (103).

4. Dispositif selon la revendication 3, dans lequel le deuxième substrat (103) est un substrat semi-conducteur non transparent.

5. Dispositif selon la revendication 3 ou 4, dans lequel un circuit d'attaque destiné à distribuer des informations d'élément d'image est formé sur le deuxième substrat (103).

6. Dispositif selon la revendication 3, 4 ou 5, dans lequel des électrodes d'élément d'image réfléchissante sont formées sur le deuxième substrat (103).

7. Dispositif selon l'une quelconque des revendications 3 à 6, dans lequel le deuxième substrat (103) comprend des éléments actifs, des lignes de transmission de signal, un isolant de couche intermédiaire formé sur les lignes de transmission de signal et des électrodes d'élément d'image réfléchissantes formées sur l'isolant.

8. Dispositif selon la revendication 3, dans lequel une électrode de chaque élément actif est une électrode d'élément d'image réfléchissante.

9. Dispositif électro-optique à cristaux liquides du type à réflexion selon la revendication 3, dans lequel les éléments actifs sont des éléments MIM.

10. Dispositif selon la revendication 1, dans lequel une première couche d'électrode transparente (904) est prévue sur le côté du premier substrat faisant face à la couche de cristaux liquides (902), le deuxième substrat est transparent, et un miroir diélectrique (903), une couche photoconductrice (901) et une deuxième couche d'électrode transparente (904) sont prévus dans cet ordre entre la couche de cristaux liquides (902) et le deuxième substrat.

11. Appareil d'affichage couleur du type à projection comprenant une pluralité de dispositifs électro-optiques de l'une quelconque des revendications précédentes.

12. Appareil selon la revendication 11, dans lequel il est prévu trois des dispositifs électro-optiques, l'appareil comprenant en outre :
un élément dichroïque (1415) destiné à séparer la lumière de lecture incidente en trois faisceaux lumineux de longueurs d'onde différentes correspondant au rouge, vert et bleu, respectivement, chaque faisceau lumineux devant être appliqué comme lumière incidente à un dispositif différent parmi les trois dispositifs électro-optiques à cristaux liquides du type à réflexion, et à synthétiser les faisceaux lumineux réfléchis et modulés par image par les trois dispositifs électro-optiques à cristaux liquides du type à réflexion.

13. Appareil selon la revendication 12, dans lequel l'élément dichroïque (1415) présente deux sortes de surfaces à sélection de longueur d'onde s'entrecroisant perpendiculairement l'une l'autre.

14. Appareil selon la revendication 12 ou 13, dans lequel les dispositifs électro-optiques à cristaux liquides de la revendication 10 sont utilisés, l'appareil comprenant en outre un système optique à formation d'image d'amplification égale vertical (1504, 1505, 1506) afin de projeter des images respectives à partir de moyens de fourniture d'images (1507, 1508, 1509) sur la couche photoconductrice de chaque dispositif de la pluralité de dispositifs électro-optiques à cristaux liquides.
